# EUROPÄISCHE PATENTSCHRIFT

(11) **EP 2 989 514 B1**
(45) Veröffentlichungstag und Bekanntmachung des Hinweises auf die Patenterteilung: **28.08.2019**
(21) Anmeldenummer: 14719654.7
(22) Anmeldetag: 08.04.2014
(51) Int. Cl.: G05B 19/4099

(54) **OPTIMIERUNG EINES FERTIGUNGSPROZESSES**
OPTIMIZATION OF A PRODUCTION PROCESS
OPTIMISATION D'UN PROCESSUS DE FABRICATION

(30) Priorität: 26.04.2013 DE 102013207656
(43) Veröffentlichungstag der Anmeldung: 02.03.2016
(73) Patentinhaber: Siemens Aktiengesellschaft, 80333 München (DE)
(72) Erfinder: HARTMANN, Dirk, 85617 Aßling (DE); STELZIG, Philipp Emanuel, 87754 Kammlach (DE); WEVER, Utz, 81539 München (DE); GERSCH, Roland, 80686 München (DE)
(86) Internationale Anmeldenummer: PCT/EP2014/057026
(87) Internationale Veröffentlichungsnummer: WO 2014/173674

(56) Entgegenhaltungen:
- EP-A1- 1 486 317
- DE-U1- 8 916 157

## Beschreibung

Die vorliegende Erfindung bezieht sich auf das technische Gebiet des Additive Manufacturing, insbesondere der Optimierung eines Fertigungsprozesses für ein mittels Additive Manufacturing herzustellendes Bauteil mittels einer Simulation des Fertigungsprozesses.

Additive Manufacturing (AM) ist ein Fertigungsverfahren, das zunehmend an Bedeutung gewinnt. Maschinen zur Produktion von Bauteilen, die industriellen Standards genügen sind mittlerweile kommerziell erhältlich. Es wird erwartet, dass diese in den kommenden Jahren herkömmliche Fertigungsprozesse in vielen Bereichen ersetzen werden.

Im Gegensatz zu subtraktiven Verfahren bauen auf AM basierende Fertigungsprozesse den Körper durch sukzessives Hinzufügen von Material auf. Hierbei wird ein nicht-bindiges Material schichtweise in einem Fertigungsraum (auch z.B. Produktionsraum, Bauraum oder Raum genannt) aufgebracht und jeweils die Bestandteile, die das zu fertigende Teil ausmachen, werden bindig zusammengefügt. So werden in Stereographischen Verfahren Kunstharzbäder verwendet, die durch einen UV-Lichtstrahl schichtweise erhärtet werden können, und in Laser-SinterVerfahren wird zermahlenes Pulver schichtweise zusammen geschweißt.

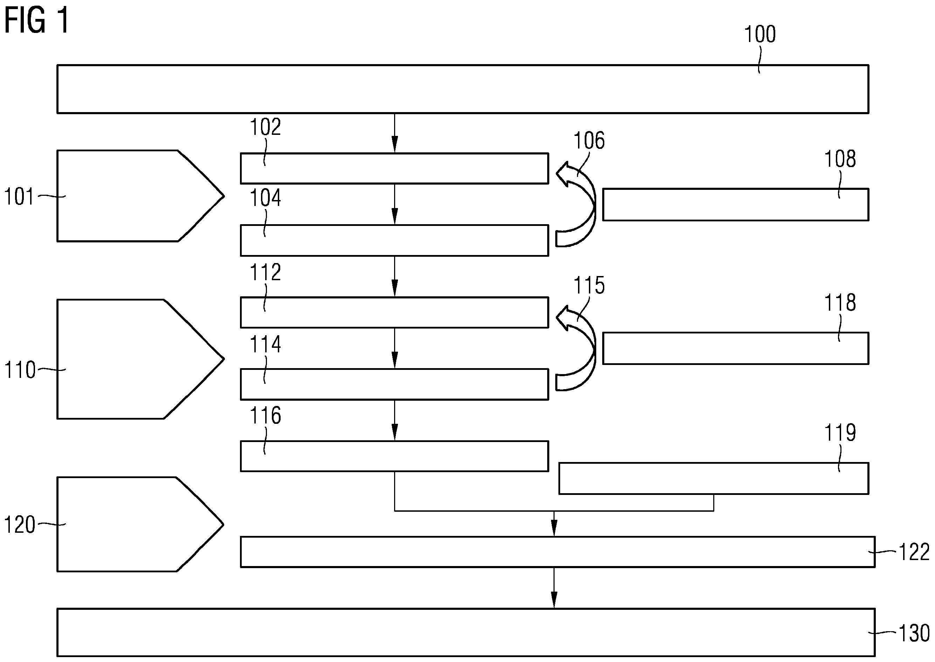

Ein typischer Designprozess 100 für ein mittels Additive Manufacturing zu erstellendes Bauteil ist in Figur 1 dargestellt. Basierend auf dem vorgegebenen geometrischen Design 102 können in einem Verfahrensschritt 104 Designänderungen in der inneren Struktur vorgenommen werden. Oft erfolgt hier auf Basis von Redesign-Zyklen 106 eine zyklische Iteration mittels Analyse-, Simulations- und Optimierungsmethoden 108. Nach diesem Produkt-Design-Prozess 101 beginnt der eigentliche Fertigungsprozess 110 mit dem Design der Fertigungsmethode 112, d.h. wie der 3D-Drucker für die Fertigung zu konfigurieren ist und welches Design (mit eventuellen Stützstrukturen) letztendlich gefertigt wird. Im Verfahrensschritt 114 wird ein Design für Stützstrukturen entworfen. Oft erfolgt hier auf Basis von Redesign-Zyklen 115 eine zyklische Iteration mittels eines Data Integrity Checks 118.

Im einem AM Machine Prozess 120 werden im Verfahrensschritt 116 eine Schichtenerzeugung (englisch: Slice generation) vorgenommen und im Verfahrensschritt 119 AM Process Parameter bestimmt. Aus den generierten Schichten 116 und den AM Process Parameter 119 werden im Verfahrensschritt 122 Machine process control data generiert, aus welchen im 3D Drucker das AM Produkt 130 hergestellt werden kann.

Bei der Produktion von hoch-qualitativen Bauteilen, wie diese in vielen industriellen Produkten benötigt werden, treten bei der Planung des Fertigungsprozesses drei zentrale Herausforderungen auf: Erstens bestimmt die Wahl der Maschinenparameter der 3D-Drucker, z.B. die Intensität des Lasers, die Qualität der Bauteile, z.B. die Haltbarkeit. Die genaue Wahl der Maschinenparameter ist jedoch nicht trivial und erfordert in vielen Fällen eine große Erfahrung sowie mehrere Iterationszyklen, um die optimalen Maschinenparameter zu identifizieren. Zweitens haben das Pulver und das herzustellende Bauteil unterschiedliche Dichten, so dass Stützstrukturen zusätzlich eingefügt werden müssen, um die geforderten Genauigkeiten des Bauteils zu garantieren. Ferner beobachtet man bei geometrisch komplexen Strukturen häufig Teilgebiete eines gleichwohl zusammenhängenden Körpers, die in Gravitationsrichtung nicht durch den Körper selbst gestützt werden, sondern ihn in Gravitationsrichtung an einem Materialausleger hängend auf Zug belasten (man stelle sich etwa einen Masten mit nach unten weisendem Ausleger vor). Bei Schnittbildung führt dies in derartigen Körpern zu nicht zusammenhängenden Querschnitten, welche im Pulverbad zunächst nicht durch darunterliegende Teile der eigentlichen Geometrie gestützt würden und somit bei Herstellung nur auf zusammenhaltlosem Pulver auflägen. Auch solche Situationen können in der Praxis durch Hinzufügen zusätzlicher Stützstrukturen umgangen werden. Diese zusätzlichen Stützstrukturen führen zu einem Verbrauch von zusätzlichen Material sowie einem weiteren Bearbeitungsschritt in dem diese entfernt werden müssen. Auch die Wahl der Stützstrukturen sowie die genaue Platzierung des zu produzierenden Bauteils (die letztendlich die Anzahl der benötigten Stützstrukturen implizit bestimmt) erfordern einen großen Aufwand, Erfahrungsschatz und oft mehrere Iterationszyklen. Und drittens kann eine ungünstige Wahl von Stützstrukturen sich negativ auf die Qualität des Bauteils dahingehend auswirken, als dass produktionsinduzierte Restspannungen in den Stützstrukturen in das eigentliche Bauteil abfließen und damit zu bleibenden parasitären Deformationen führen.

Bisher wurden die genaue Platzierung / Orientierung des Bauteils sowie Stützstrukturen manuell vorgenommen. Das Ergebnis ließ sich erst nach der Fertigung beurteilen.

Bisher wurden die Herausforderungen durch eine manuelle Herangehensweise gelöst. In "Optimal dimensional and mechanical properties of laser sintered hardware by thermal analysis and parameter optimization" (Patent US 2009/0326706 A1) wurde eine Automatisierung der Ableitung optimaler Prozess Parameter vorgeschlagen.

Dokument DANJOU, S.; KÖHLER,P.: Ermittlung optimaler Bauteileorientierung zur Verbesserung der Prozessplanung in der CAD/ RP-Kette. In: RT Forum für Rapid Technologie, eJournal, 6 (2009), http://rtejournal.de/ausgabe6/2210/view, 2010, befasst sich mit der computergestützten Optimierung der Bauteilorientierung.

Durch die manuelle Herangehensweise an diese drei Herausforderungen wird viel Zeit von der Entwicklung bis zur Produktion des eigentlichen Bauteils verloren. Gleichwohl vergrößert sich das mittels Additive Manufacturing herzustellende Objekt durch unnötig große Stützstrukturen, was ebenfalls den eigentlichen Produktionsprozess verlangsamt.

Herkömmliche Software zum automatischen Generieren von Stützstrukturen identifiziert anhand eines gegebenen Kriterienkataloges, z.B. Winkel von Flächen, Fläche die eine Unterstützung benötigen. Das Stützmaterial selbst wird aber nicht hinsichtlich des verwendeten Materials optimiert - im Wesentlichen werden einfache Säulen gebildet.

Da Stützstrukturen eine Nachbearbeitung erfordern (Entfernen mit subtraktiven Methoden) sind Designs, die (viele) Stützstrukturen benötigen, nicht vorteilhaft. Insbesondere wenn die Bereiche in denen Stützstrukturen benötigt werden schwer zugänglich sind.

Es ist daher Aufgabe der vorliegenden Erfindung, diese Nachteile zu überwinden.

Diese Aufgabe wird durch die in den unabhängigen Ansprüchen beschriebenen Lösungen gelöst. Vorteilhafte Ausgestaltungen der Erfindung sind in weiteren Ansprüchen angegeben.

Gemäß einem Aspekt betrifft die Erfindung ein Verfahren zur Optimierung eines Fertigungsprozesses für ein mittels Additive Manufacturing herzustellendes Bauteil. Das Verfahren wird mittels einer Simulation des Fertigungsprozesses durchgeführt. Fest vorgegebene notwendige Eigenschaften des Bauteils sind als Randbedingungen der Simulation vorgegeben. Das Verfahren umfasst die folgenden Verfahrensschritte, welche im Rahmen der Simulation durchgeführt werden:
In einem Verfahrenschritt wird eine nach einem Prozess-Optimierungskriterium optimierte Position des Bauteils in einem Fertigungsraum ermittelt. In einem anderen Verfahrensschritt werden von durch den Fertigungsprozess verursachbare Verschiebungen und/oder Spannungen des Bauteils berechnet. In einem weiteren Verfahrensschritt werden Stützstrukturen ermittelt, welche den Verschiebungen und/oder Spannungen entgegen wirken. Dabei werden die Stützstrukturen nach dem Prozess-Optimierungskriterium optimiert. In noch einem weiteren Verfahrensschritt wird zumindest ein nach einem Bauteil-Optimierungskriterium optimierter Teil des Designs des Bauteils ermittelt.

Das Bauteil-Optimierungskriterium und das Prozess-Optimierungskriterium können unterschiedlich sein. Außerdem können das Bauteil-Optimierungskriterium und das Prozess-Optimierungskriterium gewichtet werden.

In einer Ausgestaltung des Verfahrens wird eine Optimierung bezüglich des Designs des Bauteils und des Fertigungsprozesses des Bauteils gekoppelt und/oder gemeinsam und/oder gleichzeitig durchgeführt.

Das erfindungsgemäße Verfahren kann auch eine Anpassung des Designs des Bauteils an das Prozess-Optimierungskriterium umfassen.

Gemäß einem weiteren Aspekt betrifft die Erfindung ein System, welches Mittel umfasst, welche zur Durchführung eines beliebigen durch die Ansprüche umfassten Verfahrens adaptiert sind.

Ausführungsformen der Erfindung werden nachfolgend anhand der Figuren beispielsweise näher erläutert. Dabei zeigen:
- Figur 1: ein repräsentativer Prozess einer Bauteilproduktion mittels 3D-Drucker;
- Figur 2: eine Komponente die durch Drehungen im Raum so platziert wird, dass die Verschiebungen durch Gravitationseinfluss auf ein Minimum reduziert werden;
- Figur 3: ein Beispiel einer automatisch generierten Stützstruktur für einen Balkenträger;
- Figur 4: Ausführungsformen des erfinderischen Systems und des erfinderischen Verfahrens.

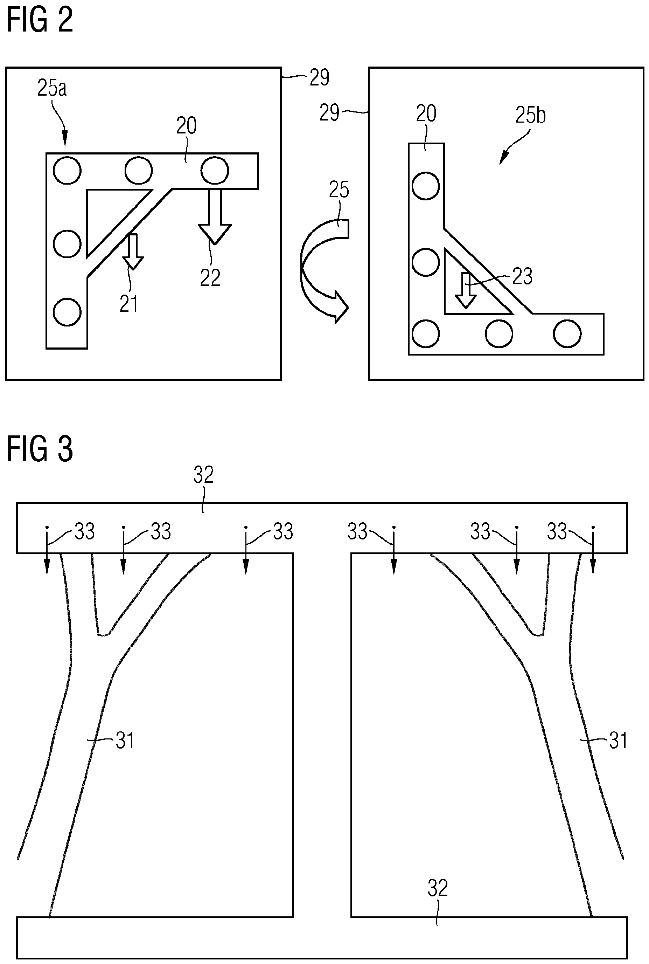

Ein Ausführungsbeispiel für eine optimierte Positionierung des Bauteils 20 im Fertigungsraum 29, die Verschiebungen durch Gravitation 21, 22, 23 auf ein Minimum reduziert, ist in Figur 2 dargestellt. Die Berechnung kann mit einem klassischen Optimierungsverfahren, z.B. Nelder-Mead-Methode, realisiert werden. Es eignet sich aber auch jede andere nichtlineare Optimierungsmethode. Figur 2 zeigt eine Komponente 20 die ausgehend von eine ersten Position 25a durch Drehungen 25 im Raum so in eine zweite Position 25b platziert wird, dass die Verschiebungen durch Gravitationseinflüsse 21, 22, 23 auf ein Minimum reduziert werden. Das führt zu minimalem zusätzlichen Materialeinsatz für Stützstrukturen.

Figur 3 zeigt ein Ausführungsbeispiel für eine automatisch generierte Stützstruktur 31 für ein weiteres als Träger ausgestaltetes Bauteil 32. Durch Einführung der Stützstruktur 31 können Deformationen aufgrund von Dichteunterschieden in geschweißtem und losem Material verhindert werden und der Träger 32 mit der geforderten Genauigkeit entsteht. Die Berechnung wurde hier mit der SIMP Methode (Solid Isotropie Material with Penalization) durchgeführt. Die Berechnung kann jedoch auch mit anderen Verfahren (z.B. Level-Set-Methoden) erfolgen.

In konkreten in Figur 3 dargestellten Fall, wurden die Stützstrukturen 31 wie folgt generiert:
- Erstellen der Geometrie des T-Trägers 32 in einem CAD Programm
- Definition des Bauraumes (in diesem Falle eine 2D Box) und der Gravitationsrichtung 33.
- Automatische Berechnung von Stützstrukturen 31 mittels Topologieoptimierung (SIMP Methode), die Stützstrukturen 31 mit minimalem Material erzeugt.

Automatisch kann die Struktur nun in ein entsprechendes Daten-Format (z.B. STL) umgewandelt werden und per 3D-Drucker gedruckt werden.

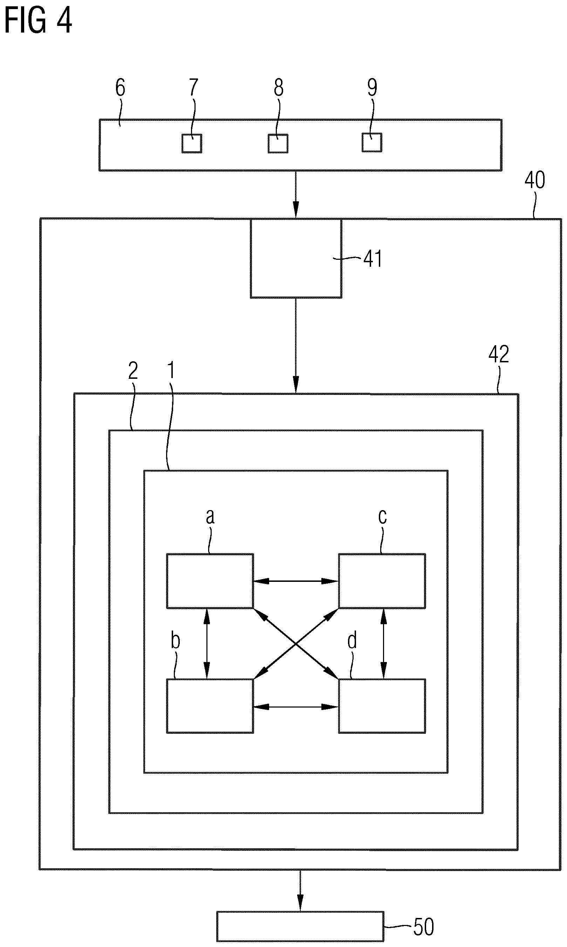

Figur 4 illustriert Ausführungsformen des erfinderischen Systems und des erfinderischen Verfahrens.

Figur 4 zeigt ein System 40 zur Optimierung eines Fertigungsprozesses 50 für ein mittels Additive Manufacturing in einem Fertigungsraum herzustellendes Bauteil, z.B. Bauteil 20 oder 32 in einem Fertigungsraum 29. Das System 40 umfasst eine Schnittstelle 41 und ein Simulationsmittel 42. Das Simulationsmittel 42 ist adaptiert, eine Simulation 2 des Fertigungsprozesses 50 für das herzustellende Bauteil durchzuführen. Das System 40 umfasst somit als Simulationsmittel 42 ausgebildete Mittel, welche zur Durchführung eines Verfahrens gemäß Ausführungsformen der Erfindung adaptiert sind.

In einer typischen Ausgangssituation sind notwendige Eigenschaften des Bauteils, wie z.B. eine Länge des Bauteils, Enden zur Befestigung des Bauteils, oder eine geforderte Tragfestigkeit des Bauteils fest vorgegeben. Die fest vorgegebenen notwendigen Eigenschaften werden als Randbedingungen 9 für die Simulation 2 über das Interface 41 in das Simulationsmittel 42 eingegeben. Andere Eigenschaften, insbesondere zumindest ein Teil des Designs des Bauteils, also zumindest ein Teil der Topologie des Bauteils, sind nicht von Anfang an fest vorgegeben, sondern können gewählt werden. Neben den Randbedingungen 9 können auch Eingaben 6, beispielsweise ein Prozess-Optimierungskriterium 7 und/oder ein Bauteil-Optimierungskriterium 8 an das Simulationsmittel 42 gesendet werden. Das Prozess-Optimierungskriterium 7 und/oder das Bauteil-Optimierungskriterium 8 kann aber auch fester Bestandteil des Simulationsmittels sein, welches nicht eingegeben wird.

Um den Fertigungsprozess 50 des herzustellenden Bauteils zu optimieren respektive um optimierte Stützstrukturen für das Bauteil automatisch zu ermitteln, wird auf dem Simulationsmittel 42 ein Verfahren 1 ausgeführt. Das Verfahren 1 umfasst die Verfahrensschritte a, b, c, d. Die Verfahrensschritte a, b, c, d werden im Rahmen der Simulation 2 durchgeführt.

Dabei wird im Verfahrensschritt a eine nach dem Prozess-Optimierungskriterium 7 optimierte Position des Bauteils 20, 32 in dem Fertigungsraum ermittelt.

Im Verfahrensschritt b werden durch den Fertigungsprozess 50 verursachbare Verschiebungen und/oder Spannungen des Bauteils 20, 32 berechnet. Diese Verschiebungen und/oder Spannungen können beispielsweise durch Gravitationskräfte 21, 22, 23, 33 und/oder durch temperaturbedingte Dichteänderungen von einem für die Fertigung des Bauteils 20, 32 zu verwendenden Material verursacht werden.

Im Verfahrensschritt c werden Stützstrukturen 31 ermittelt. Die Stützstrukturen 31 wirken den Verschiebungen und/oder Spannungen entgegen.

Im Verfahrensschritt d wird zumindest ein Teil des Designs des Bauteils 20, 32 ermittelt, welcher nach dem Bauteil-Optimierungskriterium 8 optimiert ist.

Eine Optimierung bezüglich des Designs des Bauteils 20, 32 und des Fertigungsprozesses 50 des Bauteils wird vorzugsweise gekoppelt durchgeführt und/oder gemeinsam und/oder gleichzeitig durchgeführt.

Die Verfahrensschritte a, b, c und d müssen nicht in dieser Reihenfolge durchgeführt werden, sondern können in vielfältigen Reihenfolgen, oder gar gleichzeitig, iterativ und/oder gekoppelt durchgeführt werden. Gemäß bevorzugten Ausführungsformen wird daher eine beliebige Auswahl der Verfahrensschritte a, b, c und d iterativ und/oder gekoppelt durchgeführt. Vorzugsweise ist das Verfahren so ausgestaltet, dass während der Durchführung der Simulation sämtliche Verfahrensschritte a, b, c und d iterativ und/oder gekoppelt durchgeführt werden.

Gemäß weiteren Ausführungsformen sind das Bauteil-Optimierungskriterium 8 und das Prozess-Optimierungskriterium 7 unterschiedlich. Beispielsweise hat gemäß einer bevorzugten Ausführungsform das Bauteil-Optimierungskriterium 8 ein funktionelles Design des Bauteils 20, 32 zum Ziel, während das Prozess-Optimierungskriterium 7 ein kostengünstiges Design des Fertigungsprozesses 50 anstrebt.

Gemäß weiteren bevorzugten Ausführungsformen zielt das Prozess-Optimierungskriterium 7 auf eine Minimierung von Verschiebungen während des Fertigungsprozesses 50 ab.

Gemäß weiteren bevorzugten Ausführungsformen zielt das Prozess-Optimierungskriterium 7 auf eine Minimierung der Masse der Stützstrukturen 31 ab, vorzugsweise bei gegebener maximaler Toleranz des zu fertigenden Bauteils 20, 32.

Gemäß weiteren bevorzugten Ausführungsformen zielt das Prozess-Optimierungskriterium 7 auf eine Minimierung der Abweichungen bei gegebener maximal zulässiger Masse der Stützstrukturen 31 ab. Dabei umfasst eine der Randbedingungen 9 vorzugsweise, dass Stützstrukturen 31 nur in definierten Teilgebieten hergestellt werden dürfen. Die Minimierung der Abweichungen ermöglicht eine Reduktion der Herstellungstoleranzen.

Gemäß weiteren bevorzugten Ausführungsformen zielt das Prozess-Optimierungskriterium 7 auf eine Minimierung der Anzahl der Stützstrukturen 31 ab.

Gemäß weiteren Ausführungsformen sind das Bauteil-Optimierungskriterium 8 und das Prozess-Optimierungskriterium 7 gewichtet. Dadurch kann der Wichtigkeit der beiden Kriterien Rechnung getragen werden.

Gemäß weiteren Ausführungsformen umfasst das Verfahren 1 eine Anpassung des Designs des Bauteils 20, 32 an das Prozess-Optimierungskriterium 7. Dadurch kann beispielsweise das Bauteil so ausgestaltet werden, dass seine Herstellung kostengünstiger wird, oder dass weniger Stützstrukturen für seine Herstellung notwendig sind.

Gemäß weiteren Ausführungsformen wird zumindest eine Auswahl der Verfahrensschritte a, b, c und d für unterschiedliche Designs des Bauteils 20, 32 durchgeführt.

Gemäß weiteren Ausführungsformen umfasst das Verfahren 1 den Verfahrensschritt des Ermittelns eines auf der ermittelten optimierten Position 25b des Bauteils 20, 32 im Fertigungsraum sowie den ermittelten optimierten Stützstrukturen 31 basierenden Fertigungsprozesses 50.

Gemäß weiteren Ausführungsformen umfasst das Verfahren 1 den Verfahrensschritt des Durchführens des auf der ermittelten optimierten Position 25b des Bauteils 20, 32 im Fertigungsraum sowie den ermittelten optimierten Stützstrukturen 31 basierenden Fertigungsprozesses 50. Dazu kann das System 40 als 3D Drucker ausgestaltet sein, respektive einen 3D Drucker umfassen.

Gemäß weiteren Ausführungsformen ist das System 40 ein Computer oder ein computerlesbares Medium, auf welchem das Verfahren 1 implementiert ist. Für die Herstellung des Bauteils kann der mittels des Verfahrens 1 optimierte Fertigungsprozess 50 an einen 3D Drucker übermittelt werden.

Gemäß weiteren Ausführungsformen wird während des Durchführens des Fertigungsprozesses 50 ein aktueller Zustand des Bauteils 20, 32 mittels mindestens eines Sensors erfasst. Dabei wird der Fertigungsprozess 50 basierend auf der Simulation 2 und/oder auf weiteren Simulationen automatisch entsprechend des erfassten Zustands an das Bauteil-Optimierungskriterium 8 und/oder an das Prozess-Optimierungskriterium 7 angepasst.

Gemäß weiteren Ausführungsformen umfasst das Verfahren 1 eine automatische Positionierung und Rotation des Bauteils 20, 32 mittels mathematischer Optimierungsverfahren.

Gemäß bevorzugten Ausführungsformen der Erfindung wird ein Verfahren für 3D-Drucker vorgeschlagen, das automatisch eine optimale Platzierung ermittelt und entsprechend optimale Stützstrukturen 31 generiert. Dem 3D Drucker müssen somit nur das zu fertigende Design übergeben werden und alle Anpassungen des Fertigungsprozesses werden automatisch vorgenommen.

Bevorzugte Ausführungsformen der Erfindung beruhen auf folgenden technischen Merkmalen:
- Simulation des Fertigungsprozesses, bzw. der Deformationen sowie produktionsinduzierter Spannungen des zu fertigenden Bauteiles während der Herstellung und somit der zu erwartenden Genauigkeiten.
- Berechnung der Verschiebungen des Bauteils durch Simulation, die durch die Gravitationskräfte 21, 22, 23, 33 verursacht werden. Berechnung der optimalen Position im Raum, die zu minimalen Verschiebungen führt. Die Folge ist minimaler Materialeinsatz für zusätzliche Stützstrukturen während des Fertigungsprozesses, siehe Figur 2.
- Optimierung des Fertigungsprozesses / der Orientierung und Wahl der Stützstrukturen basierend auf Simulationen. Die Optimierung kann verschiedene Kriterien zur Optimierung verfolgen, etwa eine Minimierung der Masse zusätzlicher Stützstrukturen bei gegebener maximaler Toleranz des zu fertigenden Bauteils. Oder aber die Minimierung der Toleranz bei gegebener maximal zulässiger Masse der Stützstrukturen sowie definierten Teilgebieten, in denen Stützstrukturen hergestellt werden dürfen (man beachte die notwendige Erreichbarkeit der Stützstrukturen, die ja mechanisch entfernt werden müssen).
- Realisierung der zwei Teilschritte in einem Automatisierungsmodul innerhalb der Steuereinheit der Maschine oder einem diesem vorgelagerten Automatisierungsschritt.

In einer vorteilhaften Ausführungsform erfassen Sensoren den aktuellen Zustand wie z.B. gefertigte Geometrie / Deformationen und passen den Fertigungsprozess basierend auf Simulationen und Optimierungsmethoden automatisch entsprechend der Sensorinformationen an.

Gemäß Ausführungsformen der Erfindung kann mittels TopologieOptimierung das für die Stützstrukturen benötigte Material reduziert werden. Dieses ist insbesondere bei teuren Materialien von großer Bedeutung. Des Weiteren lässt sich durch Einfügen entsprechender Sollbruchstellen das Material einfacher (aufgrund des geringeren Volumens) entfernen. Die Auswahl der Flächen, die gestützt werden müssen, erfolgt nach dem gleichen Schema wie in der herkömmlichen Software.

Gemäß Ausführungsformen der Erfindung kann bezüglich einer Optimierung des Design-Verfahrens für Additive Manufacturing mittels Topologieoptimierung ein Design erreicht werden, das mit einer "minimalen" Anzahl von Stützstrukturen auskommt. Nach jedem Designschritt werden Flächen welche eine Stützstruktur benötigen automatisch erkannt (nach dem Verfahren des Standes der Technik). Das Optimierungsverfahren legt an diesen Flächen automatisch Kräfte an, die dann in einem Topologieoptimierungsschritt zu einem Design führen, das weniger Stützstrukturen benötigt. Der Designer erhält darauf hin ein Feedback für ein optimiertes Design, welches weniger Stützstrukturen benötigt und kann entsprechende Änderungen am originalen Design selbst vornehmen oder automatisch vornehmen lassen. Eine Optimierung findet also bezüglich Design und Produktionskriterien gleichzeitig statt - statt wie bisher erst eine Optimierung bzgl. Design und dann eine entsprechende Generierung von Stützstrukturen.

Des Weiteren kann eine automatische Positionierung und Rotation des Bauteils mittels mathematischen Optimierungsverfahren vorgesehen sein. So kann sicher gestellt werden, dass für ein gegebenes Design eine minimale Anzahl von Stützstrukturen benötigt wird. Vorteilhaft ist hier eine iterative Vorgehensweise mit der Anpassung des Designs, so dass eine Kombination zu einem Bauteil führt, das eine minimale Anzahl von Stützstrukturen benötigt. Dieses ist somit nicht nur vom Design her - sondern auch vom Produktionsaufwand her optimal.

Gemäß Ausführungsformen der Erfindung umfasst das Verfahren eine Erzeugung leicht zu entfernender Stützstrukturen. Sind trotz Optimierung Stützstrukturen unumgänglich, sollten diese Stützstrukturen durch ein leicht reversibles Verfahren geschaffen werden - z.B. durch Hitzeresistenten Klebstoff der unter Einfluss von UV-Bestrahlung oder Einfluss von Chemikalien zerfällt. So können diese Stützstrukturen ohne großen Aufwand entfernt werden.

Gemäß Ausführungsformen der Erfindung können durch Rotation der Bauplattform Stützstrukturen vermieden werden. Hier kann eine optimale Rotation ebenfalls mit mathematischen Verfahren berechnet werden, wobei das Verhalten der sich bereits im Bauraum befindlichen Teilchen mit berücksichtigt werden muss. Letztere lassen sich sehr gut durch Partikelverfahren bestimmen, so dass eine mathematische Optimierung möglich ist. Vorteilhaft wäre jedoch auch hier Partikel mit leicht reversiblen Verfahren zu fixieren. So kann eine Optimierung von Stützstrukturen bei beweglicher Bauplattform vorgesehen werden (auch hier wieder in Abgrenzung zur Architektur).

Eine automatisierte Herangehensweise bietet viele Vorteile sowie die Möglichkeit einer vollständigen Prozessautomatisierung, beispielsweise für ein Verfahren zur automatisierten Generierung von Stützstrukturen in 3D Druckern

Gemäß Ausführungsformen der Erfindung werden durch eine automatisierte Herangehensweise Stützstrukturen automatisch erzeugt und eine optimale Lage des zu produzierenden Bauteils automatisch gewählt.

Gemäß Ausführungsformen der Erfindung werden eine automatische Topologieoptimierung zur Generierung von Stützstrukturen sowie eine automatische Optimierung der Platzierung des zu produzierenden Bauteils verwendet.

Gemäß Ausführungsformen der Erfindung wird ein Modul vorgeschlagen, welches eine vollständige Automatisierung des Fertigungsprozesses von qualitativ hochwertigen Teilen (insbesondere Einzelteilen) ermöglicht. Auf der einen Seite werden so Entwicklungsschleifen reduziert, da die Qualität der Teile basierend auf Simulationen schon von der Fertigung vorhergesagt wird und optimal angepasst wird. Auf der anderen Seite ist durch die Automatisierung auch eine Trennung von Design und Produktion einfacher zu realisieren, da das Design automatisch angepasst wird, um eine optimale Qualität und Genauigkeit zu erhalten.

## Patentansprüche

1. Verfahren (1) zur Optimierung eines Fertigungsprozesses für ein mittels Additive Manufacturing herzustellendes Bauteil (20, 32) mittels einer Simulation (2) des Fertigungsprozesses (50), wobei fest vorgegebene notwendige Eigenschaften des Bauteils (20, 32) als Randbedingungen (9) der Simulation (2) vorgegeben sind, und wobei das Verfahren die folgenden Verfahrensschritte (a, b, c, d) umfasst, welche im Rahmen der Simulation durchgeführt werden:
a) Ermittlung einer nach einem Prozess-Optimierungskriterium (7) optimierten Position des Bauteils (20, 32) in einem Fertigungsraum; **gekennzeichnet durch**,
b) Berechnen von durch den Fertigungsprozess (50) verursachbaren Verschiebungen und/oder Spannungen des Bauteils (20, 32) ;
c) Ermittlung von nach dem Prozess-Optimierungskriterium (7) optimierten Stützstrukturen (31), welche den Verschiebungen und/oder Spannungen entgegen wirken;
d) Ermittlung zumindest eines nach einem Bauteil-Optimierungskriterium (8) optimierten Teils des Designs des Bauteils (20, 32).

2. Verfahren (1) nach Anspruch 1, wobei zumindest eine Auswahl der Verfahrensschritte a), b), c) und d) iterativ und/oder gekoppelt durchgeführt werden.

3. Verfahren (1) nach einem der vorhergehenden Ansprüche, wobei das Bauteil-Optimierungskriterium (8) ein funktionelles Design des Bauteils (20, 32) und das Prozess-Optimierungskriterium (7) ein kostengünstiges Design des Fertigungsprozesses (50) umfasst.

4. Verfahren (1) nach einem der vorhergehenden Ansprüche, wobei das Prozess-Optimierungskriterium (7) eine Minimierung von Verschiebungen während des Fertigungsprozesses (50) umfasst.

5. Verfahren (1) nach einem der vorhergehenden Ansprüche, wobei das Prozess-Optimierungskriterium (7) eine Minimierung der Masse der Stützstrukturen (31) vorzugsweise bei gegebener maximaler Toleranz des zu fertigenden Bauteils (20, 32) umfasst.

6. Verfahren (1) nach einem der vorhergehenden Ansprüche, wobei das Prozess-Optimierungskriterium (7) eine Minimierung der Abweichungen bei gegebener maximal zulässiger Masse der Stützstrukturen (31) umfasst, wobei vorzugsweise eine der Randbedingungen (9) umfasst, dass Stützstrukturen (31) nur in definierten Teilgebieten hergestellt werden dürfen.

7. Verfahren (1) nach einem der vorhergehenden Ansprüche, wobei das Prozess-Optimierungskriterium (7) eine Minimierung der Anzahl der Stützstrukturen (31) umfasst.

8. Verfahren (1) nach einem der vorhergehenden Ansprüche, wobei zumindest eine Auswahl der Verfahrensschritte a), b), c) und d) für unterschiedliche Designs des Bauteils (20, 32) durchgeführt wird.

9. Verfahren (1) nach einem der vorhergehenden Ansprüche, umfassend den Verfahrensschritt des Ermittelns eines auf der ermittelten optimierten Position (25b) des Bauteils (20, 32) im Fertigungsraum sowie den ermittelten optimierten Stützstrukturen (31) basierenden Fertigungsprozesses (50).

10. Verfahren (1) nach einem der vorhergehenden Ansprüche, umfassend den Verfahrensschritt des Durchführens des auf der ermittelten optimierten Position (25b) des Bauteils (20, 32) im Fertigungsraum sowie den ermittelten optimierten Stützstrukturen (31) basierenden Fertigungsprozesses (50).

11. Verfahren (1) nach Anspruch 10, wobei während des Durchführens des Fertigungsprozesses (50) ein aktueller Zustand des Bauteils (20, 32) mittels mindestens eines Sensors erfasst wird, und der Fertigungsprozess (50) basierend auf der Simulation (2) und/oder auf weiteren Simulationen automatisch entsprechend des erfassten Zustands an das Bauteil-Optimierungskriterium (8) und/oder an das Prozess-Optimierungskriterium (7) angepasst wird.

12. Verfahren (1) nach einem der vorhergehenden Ansprüche, wobei die durch den Fertigungsprozess (50) verursachbaren Verschiebungen und/oder Spannungen durch Gravitationskräfte (21, 22, 23, 33) und/oder durch Dichteänderungen von einem für die Fertigung des Bauteils (20, 32) zu verwendenden Materials verursachbar sind.

13. Verfahren (1) nach einem der vorhergehenden Ansprüche, umfassend eine automatische Positionierung und Rotation des Bauteils (20, 32) mittels mathematischer Optimierungsverfahren.

14. System (40) umfassend Mittel (42) welche zur Durchführung eines Verfahrens (1) nach einem der vorhergehenden Ansprüche adaptiert sind.

15. System nach Anspruch 14, wobei das System (40) ein 3D Drucker ist.

## Claims

1. Method (1) for optimizing a production process for a component (20, 32) to be produced by additive manufacturing, by means of a simulation (2) of the production process (50), wherein predetermined necessary properties of the component (20, 32) are specified as boundary conditions (9) of the simulation (2), and wherein the method comprises the following method steps (a, b, c, d), which are carried out in the course of the simulation:
a) determining a position of the component (20, 32) in a production space that is optimized according to a process optimization criterion (7);
**characterized by**
b) calculating displacements of and/or stresses of the component (20, 32)that can be caused by the production process (50) ;
c) determining supporting structures (31) optimized according to the process optimization criterion 97) which counteract the displacements and/or stresses;
d) determining at least one part of the design of the component (20, 32) that is optimized according to a component optimization criterion (8).

2. Method (1) according to Claim 1, wherein at least a selection of the method steps a), b), c) and d) is carried out iteratively and/or in a linked manner.

3. Method (1) according to one of the preceding claims, wherein the component optimization criterion (8) comprises a functional design of the component (20, 32) and the process optimization criterion (7) comprises a low-cost design of the production process (50).

4. Method (1) according to one of the preceding claims, wherein the process optimization criterion (7) comprises a minimization of displacements during the production process (50) .

5. Method (1) according to one of the preceding claims, wherein the process optimization criterion (7) comprises a minimization of the mass of the supporting structures (31), preferably for a given maximum tolerance of the component (20, 32) to be produced.

6. Method (1) according to one of the preceding claims, wherein the process optimization criterion (7) comprises a minimization of the deviations for a given maximum allowable mass of the supporting structures (31), wherein preferably one of the boundary conditions (9) comprises that supporting structures (31) can only be produced in defined partial areas.

7. Method (1) according to one of the preceding claims, wherein the process optimization criterion (7) comprises a minimization of the number of supporting structures (31).

8. Method (1) according to one of the preceding claims, wherein at least a selection of the method steps a), b), c), and d) is carried out for different designs of the component (20, 32).

9. Method (1) according to one of the preceding claims, comprising the method step of determining a production process (50) based on the determined optimized position (25b) of the component (20, 32) in the production space and the determined optimized supporting structures (31).

10. Method (1) according to one of the preceding claims, comprising the method step of carrying out the production process (50) based on the determined optimized position (25b) of the component (20, 32) in the production space and the determined optimized supporting structures (31).

11. Method (1) according to Claim 10, wherein, while carrying out the production process (50), a current state of the component (20, 32) is detected by means of at least one sensor, and, based on the simulation (2) and/or on further simulations, the production process (50) is automatically adapted in a way corresponding to the detected state to the component optimization criterion (8) and/or to the process optimization criterion (7).

12. Method (1) according to one of the preceding claims, wherein the displacements and/or stresses that can be caused by the production process (50) can be caused by gravitational forces (21, 22, 23, 33) and/or by changes in density of a material to be used for production of the component (20, 32).

13. Method (1) according to one of the preceding claims, comprising an automatic positioning and rotation of the component (20, 32) by means of mathematical optimization methods.

14. System (40) comprising means (42) that are adapted for carrying out a method (1) according to one of the preceding claims.

15. System according to Claim 14, wherein the system (40) is a 3D printer.

## Revendications

1. Procédé (1) destiné à l'optimisation d'un processus de production pour un composant (20, 32) à fabriquer au moyen d'une fabrication additive au moyen d'une simulation (2) du processus de production (50), dans lequel des propriétés du composant (20, 32) nécessaires prédéfinies de manière fixe sont prédéfinies en tant que conditions marginales (9) de la simulation (2), et dans lequel le procédé comprend les étapes de procédé suivantes (a, b, c, d), lesquelles sont réalisées dans le cadre de la simulation :
a) la détermination d'une position du composant (20, 32) optimisée selon un critère d'optimisation de processus (7) dans un local de production ;
**caractérisé par**
b) le calcul de déplacements et/ou de tensions du composant (20, 32) pouvant être générés par le biais du processus de production (50) ;
c) la détermination de structures de soutien (31) optimisées selon le critère d'optimisation de processus (7), lesquelles agissent à l'encontre des déplacements et/ou tensions ;
d) la détermination d'au moins une partie optimisée selon un critère d'optimisation de composant (8) de la conception du composant (20, 32).

2. Procédé (1) selon la revendication 1, dans lequel au moins une sélection des étapes de procédé a), b), c) et d) est réalisée de manière itérative et/ou couplée.

3. Procédé (1) selon l'une des revendications précédentes, dans lequel le critère d'optimisation de composant (8) comprend une conception fonctionnelle du composant (20, 32) et le critère d'optimisation de processus (7) comprend une conception économique du processus de production (50).

4. Procédé (1) selon l'une des revendications précédentes, dans lequel le critère d'optimisation de processus (7) comprend une minimisation des déplacements pendant le processus de production (50).

5. Procédé (1) selon l'une des revendications précédentes, dans lequel le critère d'optimisation de processus (7) comprend une minimisation de la masse des structures de soutien (31) de préférence pour une tolérance maximale donnée du composant (20, 32) à fabriquer.

6. Procédé (1) selon l'une des revendications précédentes, dans lequel le critère d'optimisation de processus (7) comprend une minimisation des écarts pour une masse admissible maximale donnée des structures de soutien (31), dans lequel de préférence une des conditions marginales (9) comprend le fait que des structures de soutien (31) ne doivent être fabriquées que dans des zones définies.

7. Procédé (1) selon l'une des revendications précédentes, dans lequel le critère d'optimisation de processus (7) comprend une minimisation du nombre des structures de soutien (31) .

8. Procédé (1) selon l'une des revendications précédentes, dans lequel au moins une sélection des étapes de procédé a), b), c) et d) est réalisée pour des conceptions différentes du composant (20, 32).

9. Procédé (1) selon l'une des revendications précédentes, comprenant l'étape de procédé de la détermination d'un processus de production (50) basé sur la position (25b) optimisée déterminée du composant (20, 32) dans le local de production ainsi que sur les structures de soutien (31) optimisées déterminées.

10. Procédé (1) selon l'une des revendications précédentes, comprenant l'étape de procédé de la réalisation du processus de production (50) basé sur la position (25b) optimisée déterminée du composant (20, 32) dans le local de production ainsi que sur les structures de soutien (31) optimisées déterminées.

11. Procédé (1) selon la revendication 10, dans lequel pendant la réalisation du processus de production (50) un état effectif du composant (20, 32) est détecté au moyen d'au moins un capteur, et le processus de production (50) est adapté, en se basant sur la simulation (2) et/ou sur d'autres simulations automatiquement conformément à l'état détecté, au critère d'optimisation de composant (8) et/ou au critère d'optimisation de processus (7).

12. Procédé (1) selon l'une des revendications précédentes, dans lequel les déplacements et/ou tensions pouvant être générés par le biais du processus de production (50) peuvent être générés par le biais de forces de gravitation (21, 22, 23, 33) et/ou par le biais de modifications de densité par un matériau à utiliser pour la production du composé (20, 32).

13. Procédé (1) selon l'une des revendications précédentes, comprenant un positionnement et une rotation automatiques du composant (20, 32) au moyen de procédés d'optimisation mathématiques.

14. Système (40) comprenant des moyens (42) qui sont adaptés pour la réalisation d'un procédé (1) selon l'une des revendications précédentes.

15. Système selon la revendication 14, dans lequel le système (40) est une imprimante 3D.
